# FASCICULE DE BREVET EUROPEEN

(11) **EP 3 799 347 B1**
(45) Date de publication et mention de la délivrance du brevet: **13.10.2021**
(21) Numéro de dépôt: 20199462.1
(22) Date de dépôt: 30.09.2020
(51) Int. Cl.: H04L 9/06

(54) **SÉCURISATION DU CHIFFREMENT DES ET DU DÉCHIFFREMENT DES INVERSE**
SICHERUNG FÜR DES-VERSCHLÜSSELUNG UND FÜR UMGEKEHRTE DES-ENTSCHLÜSSELUNG
SECURING OF DES ENCRYPTION AND REVERSE DES DECRYPTION

(30) Priorité: 26.09.2019 FR 1910644
(43) Date de publication de la demande: 31.03.2021
(73) Titulaire: IDEMIA France, 92400 Courbevoie (FR)
(72) Inventeur: GIRAUD, Christophe, 33600 Pessac (FR)
(74) Mandataire: Cabinet Beau de Loménie

(56) Documents cités:
- M Prabhavathi ET AL: "Design and Implementation of Triple DES Encryption Scheme", International Journal on Recent and Innovation Trends in Computing and Communication ; Volume 6, Issue 3, 1 mars 2018 (2018-03-01), pages 100-106, XP055676904, Extrait de l'Internet: URL:https://s3.amazonaws.com/academia.edu. documents/56730122/1522225030_28-03-2018.p df?response-content-disposition=inline;%20 filename=Design_and_Implementation_of_Trip le_DES.pdf&X-Amz-Algorithm=AWS4-HMAC-SHA25 6&X-Amz-Credential=AKIAIWOWYYGZ2Y53UL3A/20 200316/us-east-1/s3/aws4_request&X-Amz-Dat e=20200316 [extrait le 2020-03-16]

## Description

### Domaine Technique

L'invention se rapporte au domaine de la cryptographie et concerne plus particulièrement la mise en œuvre sécurisée de chiffrements de type DES ou de déchiffrements de type DES inverse pour chiffrer ou déchiffrer des données.

### Technique antérieure

Le DES (pour « Data Encryption Standard ») est un algorithme de chiffrement symétrique bien connu utilisant une clé de chiffrement pour chiffrer des données. Le DES inverse (noté aussi par la suite DES⁻¹) permet par ailleurs de déchiffrer sur le même principe des données précédemment chiffrées au moyen d'un chiffrement DES.

Le DES et le DES inverse (noté DES⁻¹), offrent un niveau de sécurité relativement limité. Toutefois, bien qu'elles soient vulnérables notamment face à une attaque systématique en un temps raisonnable, ces techniques sont encore aujourd'hui couramment utilisées dans diverses applications. Le DES est par exemple encore utilisé pour le calcul de codes MAC (pour « Message Authentication Code »), notamment pour assurer l'intégrité d'un message.

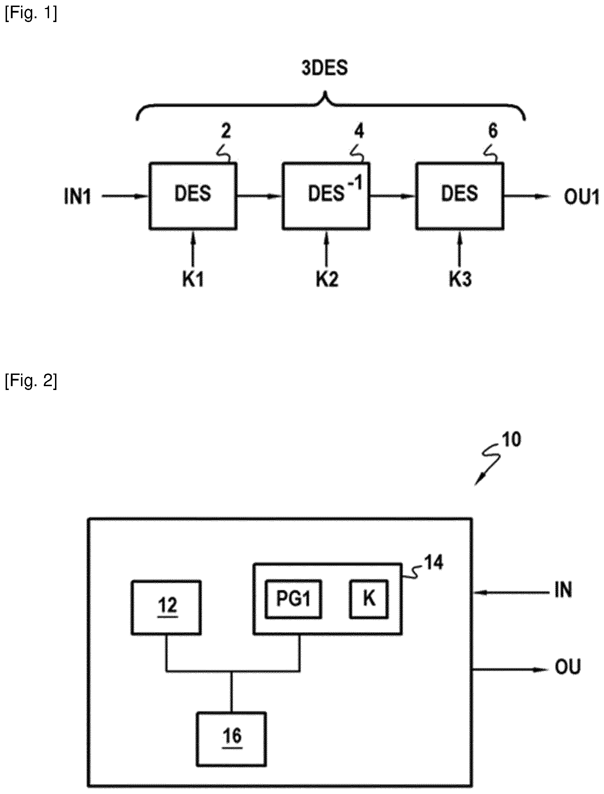

Le triple DES (aussi nommé 3DES) est un algorithme de chiffrement symétrique. Comme représenté dans un exemple en **figure 1****,** un chiffrement 3DES implique l'exécution successive d'un premier chiffrement 2 de type DES à partir de données d'entrées IN1, suivi d'un déchiffrement 4 de type DES inverse (DES⁻¹) prenant en entrée le résultat du chiffrement 2, suivi d'un deuxième chiffrement 6 de type DES prenant en entrée le résultat du déchiffrement 4.

Les opérations 2, 4 et 6 prennent respectivement en entrée des clés K1, K2 et K3. Ces 3 clés peuvent être différentes mais le triple DES peut être utilisé avec 3 fois la même valeur de clé (ou seulement 2 clés différentes) pour mettre en œuvre un simple chiffrement DES, pour des raisons notamment de rétrocompatibilité. Dans une implémentation matérielle, cela permet ainsi d'utiliser un même composant pour mettre en œuvre à la fois le standard DES et le standard triple DES.

De manière analogue, un déchiffrement de type triple DES inverse (appelé aussi 3DES⁻¹) comprend l'enchaînement successif d'un premier DES inverse, d'un DES et d'un deuxième DES inverse, en utilisant 3 clés respectives.

Outre les attaques théoriques sur l'algorithme DES, il existe en parallèle des attaques physiques qui peuvent retrouver très rapidement la valeur de la clé secrète. En particulier, lorsque ce type d'algorithme est mis en œuvre dans certains dispositifs, tels que des cartes à puce par exemple, il est vulnérable en particulier à des attaques malveillantes s'appuyant sur la surveillance des signaux électromagnétiques émis par le dispositif au cours de l'exécution de l'algorithme. A partir d'une analyse des signaux électromagnétiques captés au cours de l'exécution du chiffrement, un tiers ou entité malveillante est susceptible de déterminer les clés utilisées et ainsi de craquer le chiffrement.

Un besoin existe donc aujourd'hui pour renforcer la sécurité du chiffrement DES et du déchiffrement DES⁻¹ utilisant respectivement un chiffrement 3DES ou déchiffrement 3DES⁻¹. L'article par M. Prabhavathi et al: "Design and Implementation of Triple DES Encryption Scheme", International Journal on Recent and Innovation Trends in Computing and Communication ; Volume 6, Issue 3, pages 100-106, expose une implémentation de l'algorithme 3DES selon une architecture à pipeline.

### Exposé de l'invention

A cet effet, la présente invention concerne un procédé de chiffrement ou de déchiffrement, comprenant une série d'au moins un chiffrement de type triple DES ou d'au moins un déchiffrement de type triple DES inverse, chaque chiffrement ou déchiffrement prenant en entrée des données d'entrée et comportant une première, deuxième et troisième opération de type DES ou DES inverse qui sont réalisées successivement en utilisant respectivement une première, deuxième et troisième clé, dans lequel les première et troisième opérations sont des opérations de type identique, de chiffrement ou de déchiffrement, tandis que la deuxième opération est une opération de type inverse aux première et troisième opérations, ledit procédé comprenant :
- exécution de chaque chiffrement ou déchiffrement de ladite série, soit selon un premier mode dans lequel les deuxième et troisième clés sont des clés identiques de sorte que les deuxième et troisième opérations s'annulent mutuellement, soit selon un deuxième mode dans lequel les première et deuxième clés sont des clés identiques de sorte que les première et deuxième opérations s'annulent mutuellement,
- l'un parmi le premier mode et le deuxième mode étant sélectionné de façon aléatoire pour chaque chiffrement ou déchiffrement de ladite série.

Selon un exemple particulier, dans le premier mode les deuxième et troisième clés sont différentes de la première clé. De même, dans le deuxième mode, les première et deuxième clés sont différentes de la troisième clé.

L'application aléatoire du premier ou deuxième mode lors de chaque chiffrement ou déchiffrement de la série permet de complexifier significativement l'analyse des signaux qu'un hackeur doit entreprendre pour déterminer les clés utilisées pour la mise en œuvre du simple chiffrement DES ou déchiffrement DES⁻¹ à l'aide respectivement d'un chiffrement 3DES ou déchiffrement 3DES⁻¹. En basculant aléatoirement entre ces deux modes, il est particulièrement difficile pour un tiers malveillant de déterminer les clés utilisées pour la mise en œuvre du simple chiffrement DES ou déchiffrement DES⁻¹ lors de chaque chiffrement ou déchiffrement de la série. Il sera donc plus difficile de craquer le chiffrement DES ou déchiffrement DES⁻¹.

Dans un mode de réalisation particulier, la série comprend :
- une pluralité de chiffrements de type triple DES, les première et troisième opérations étant des opérations de chiffrement de type DES et la deuxième opération étant une opération de déchiffrement de type DES inverse ; ou
- une pluralité de déchiffrements de type triple DES inverse, les première et troisième opérations étant des opérations de déchiffrement de type DES inverse et la deuxième opération étant une opération de chiffrement de type DES.

Dans un mode de réalisation particulier, un mode commun respectif est sélectionné de façon indépendante, pour chaque groupe de X chiffrement(s) ou déchiffrement(s) de la série, parmi le premier mode et le deuxième mode aléatoirement, préalablement à l'exécution de ladite série, X étant un nombre entier supérieur ou égal à 1,
chaque mode commun respectif étant appliqué à chaque chiffrement ou déchiffrement du groupe correspondant.

Dans un mode de réalisation particulier, un mode unique, parmi le premier mode et le deuxième mode, est sélectionné aléatoirement préalablement à l'exécution de ladite série, ledit mode unique étant appliqué à chaque chiffrement ou déchiffrement de ladite série.

Dans un mode de réalisation particulier, l'exécution est telle que :
- dans le premier mode, les deuxième et troisième clés sont des clés aléatoires identiques ; et
- dans le deuxième mode, les première et deuxième clés sont des clés aléatoires identiques.

Dans un mode de réalisation particulier, la série comprend une pluralité de chiffrements successifs de type triple DES ou de déchiffrements successifs de type triple DES inverse, le procédé comprenant :
- obtention de données d'entrée effectives à chiffrer ou déchiffrer ; dans lequel, lors de ladite série :
- au moins un chiffrement factice ou déchiffrement factice prenant chacun en entrée des premières données d'entrée est réalisé en appliquant aléatoirement le premier ou second mode, de sorte que dans le premier mode la première clé est une clé factice choisie aléatoirement et dans le deuxième mode la troisième clé est une clé factice choisie aléatoirement ; et
- un unique chiffrement effectif ou déchiffrement effectif prenant en entrée les données d'entrée effectives est réalisé en appliquant aléatoirement le premier ou le second mode pour chiffrer ou déchiffrer les données d'entrées effectives, de sorte que dans le premier mode la première clé est une clé effective sélectionnée pour chiffrer ou déchiffrer lesdites données d'entrées effectives et dans le deuxième mode la troisième clé est une clé effective sélectionnée pour chiffrer ou déchiffrer lesdites deuxièmes données d'entrées.

Dans un mode de réalisation particulier, ladite clé factice est identique pour chaque chiffrement factice ou déchiffrement factice, ladite clé factice étant sélectionnée aléatoirement préalablement à l'exécution de ladite série.

Dans un mode de réalisation particulier, une nouvelle clé factice est sélectionnée aléatoirement de façon indépendante pour chaque chiffrement factice ou déchiffrement factice de sorte à être utilisée en tant que première clé dans le premier mode et en tant que troisième clé dans le deuxième mode.

Dans un mode de réalisation particulier, les premières données prises en entrée dans chaque chiffrement factice ou déchiffrement factice sont définies de sorte à être identiques aux données d'entrée effectives prises en entrée dans l'unique chiffrement effectif ou déchiffrement effectif.

Dans un mode de réalisation particulier, les premières données prises en entrée dans chaque chiffrement factice ou déchiffrement factice sont définies de façon aléatoire.

Dans un mode de réalisation particulier, les premières données sont définies aléatoirement préalablement à l'exécution de ladite série de façon à être identiques pour chaque chiffrement factice ou déchiffrement factice de ladite série.

Dans un mode de réalisation particulier, les premières données sont définies aléatoirement et de façon indépendante pour chaque chiffrement factice ou déchiffrement factice de ladite série.

Dans un mode de réalisation particulier, ladite série comprend une pluralité de chiffrements successifs de type triple DES ou de déchiffrements successifs de type triple DES inverse, le procédé comprenant :
- obtention de données d'entrée effectives à chiffrer ou déchiffrer ; dans lequel, lors de ladite série :
- au moins un chiffrement factice ou déchiffrement factice prenant chacun en entrée des données factices aléatoires est réalisé en appliquant aléatoirement le premier ou second mode ; et
- un unique chiffrement effectif ou déchiffrement effectif prenant en entrée les données d'entrée effectives est réalisé en appliquant aléatoirement le premier ou le second mode pour chiffrer ou déchiffrer les données d'entrée effectives.

Dans un mode particulier de réalisation, les différentes étapes du procédé de l'invention sont déterminées par des instructions de programmes d'ordinateurs.

En conséquence, l'invention vise aussi un programme d'ordinateur sur un support d'informations (ou support d'enregistrement), ce programme étant susceptible d'être mis en œuvre dans un dispositif, tel qu'une carte à puce par exemple, ou plus généralement dans un ordinateur, ce programme comportant des instructions adaptées à la mise en œuvre des étapes d'un procédé de l'invention tel que défini dans ce document.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations (ou support d'enregistrement) lisible par un ordinateur, et comportant des instructions d'un programme d'ordinateur tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

L'invention vise également un dispositif configuré pour mettre en œuvre le procédé de l'invention. En particulier, l'invention concerne un dispositif de chiffrement ou de déchiffrement, configuré pour exécuter une série d'au moins un chiffrement de type triple DES ou d'au moins un déchiffrement de type triple DES inverse, chaque chiffrement ou déchiffrement prenant en entrée des données d'entrée et comportant une première, deuxième et troisième opération de type DES ou DES inverse qui sont réalisées successivement en utilisant respectivement une première, deuxième et troisième clé,
dans lequel les première et troisième opérations sont des opérations de type identique, de chiffrement ou de déchiffrement, tandis que la deuxième opération est une opération de type inverse aux première et troisième opérations,
ledit dispositif comprenant :
   - un module d'exécution pour exécuter chaque chiffrement ou déchiffrement de ladite série, soit selon un premier mode dans lequel les deuxième et troisième clés sont des clés identiques de sorte que les deuxième et troisième opérations s'annulent mutuellement, soit selon un deuxième mode dans lequel les première et deuxième clés sont des clés identiques de sorte que les première et deuxième opérations s'annulent mutuellement ; et
   - un module de sélection pour sélectionner de façon aléatoire l'un parmi le premier mode et le deuxième mode à appliquer pour chaque chiffrement ou déchiffrement de ladite série.

A noter que les différents modes de réalisation définis dans ce document en relation avec le procédé de l'invention ainsi que les avantages associés s'appliquent de façon analogue au dispositif de l'invention.

Pour chaque étape du procédé de l'invention, le dispositif peut comprendre un module correspondant configuré pour réaliser ladite étape.

Selon un mode de réalisation, l'invention est mise en œuvre au moyen de composants logiciels et/ou matériels. Dans cette optique, le terme « module » peut correspondre dans ce document aussi bien à un composant logiciel, qu'à un composant matériel ou à un ensemble de composants matériels et logiciels.

### Brève description des dessins

D'autres caractéristiques et avantages de la présente invention ressortiront de la description faite ci-dessous, en référence aux dessins annexés qui en illustrent des exemples de réalisation dépourvus de tout caractère limitatif. Sur les figures:
[Fig. 1] La figure 1 représente schématiquement un chiffrement triple DES connu de l'art antérieur ;
[Fig. 2] La figure 2 représente la structure d'un dispositif conforme à un mode de réalisation particulier de l'invention ;
[Fig. 3] La figure 3 représente schématiquement un chiffrement triple DES selon un premier mode et selon un deuxième mode, conformément à un mode de réalisation particulier de l'invention ;
[Fig. 4] La figure 4 représente schématiquement un déchiffrement triple DES inverse selon un premier mode et selon un deuxième mode, conformément à un mode de réalisation particulier de l'invention ;
[Fig. 5] La figure 5 représente schématiquement, sous forme d'un diagramme, les étapes d'un procédé de chiffrement ou de déchiffrement selon un mode de réalisation particulier de l'invention ;
[Fig. 6] La figure 6 représente schématiquement une série de chiffrements triple DES mise en œuvre selon un mode de réalisation particulier de l'invention ; et [Fig. 7] La figure 7 représente schématiquement, sous forme d'un diagramme, les étapes d'un procédé de chiffrement ou de déchiffrement selon un mode de réalisation particulier de l'invention.

### Description des modes de réalisation

L'invention se propose de renforcer la sécurité du chiffrement DES et du déchiffrement DES⁻¹ utilisant respectivement un chiffrement 3DES ou déchiffrement 3DES⁻¹, face en particulier à leur vulnérabilité respective vis-à-vis d'attaques ayant recours à la surveillance des signaux électromagnétiques émis lors de la mise en œuvre de tels algorithmes.

Pour ce faire, l'invention met notamment en œuvre, selon différents modes de réalisation, un procédé de chiffrement ou de déchiffrement, comprenant une série d'au moins un chiffrement de type triple DES ou d'au moins un déchiffrement de type triple DES inverse. Chaque chiffrement ou déchiffrement prend en entrée des données d'entrée et comporte une première, deuxième et troisième opération de type DES ou DES inverse qui sont réalisées successivement en utilisant respectivement une première, deuxième et troisième clé. Le procédé comprend l'exécution de chaque chiffrement ou déchiffrement de la série, soit selon un premier mode - noté par la suite MD1 - dans lequel les deuxième et troisième clés sont des clés identiques de sorte que les deuxième et troisième opérations s'annulent mutuellement, soit selon un deuxième mode - noté par la suite MD2 - dans lequel les première et deuxième clés sont des clés identiques de sorte que les première et deuxième opérations s'annulent mutuellement. Pour chaque chiffrement ou déchiffrement de la série, l'un parmi le premier mode et le deuxième mode est ainsi sélectionné de façon aléatoire. Comme décrit par la suite, le premier mode MD1 peut être configuré de sorte que la première clé est différente des deuxième et troisième clés. De même, le deuxième mode MD2 peut être configuré de sorte que la troisième clé est différente des première et deuxième clés.

Parmi les modes de réalisation possibles, l'exécution peut notamment être réalisée de sorte que : dans le premier mode MD1 les deuxième et troisième clés sont des clés aléatoires identiques tandis que, dans le deuxième mode MD2, ce sont les première et deuxième clés qui sont des clés aléatoires identiques.

L'application aléatoire du premier ou deuxième mode lors de chaque chiffrement ou déchiffrement de la série permet de complexifier significativement l'analyse des signaux qu'un hackeur doit entreprendre pour en déduire les clés utilisées pour la mise en œuvre du simple chiffrement DES ou déchiffrement DES⁻¹ à l'aide respectivement d'un chiffrement 3DES ou déchiffrement 3DES⁻¹, et ainsi craquer le simple chiffrement DES ou déchiffrement DES⁻¹. En basculant aléatoirement entre ces deux modes MD1 et MD2, il est particulièrement difficile pour un tiers malveillant de déterminer les clés utilisées pour la mise en œuvre du simple chiffrement DES ou déchiffrement DES-1 lors de chaque chiffrement ou déchiffrement de la série.

De façon générale, le principe de l'invention s'applique de manière analogue à un chiffrement triple DES pour la mise en œuvre d'un chiffrement DES et à un déchiffrement triple DES inverse pour la mise en œuvre d'un déchiffrement DES inverse. Des exemples de réalisation sont présentés ci-après dans l'un ou l'autre de ces deux cas. Comme le comprend l'homme du métier, ces exemples peuvent être adaptés pour s'appliquer de manière analogue aussi bien à une série de chiffrements 3DES qu'à une série de déchiffrements 3DES⁻¹.

Comme indiqué ci-après, l'invention s'applique également à un dispositif configuré pour mettre en œuvre le procédé de l'invention, à un programme d'ordinateur correspondant et à un support d'informations comportant un tel programme.

D'autres aspects et avantages de la présente invention ressortiront des exemples de réalisation décrits ci-dessous en référence aux dessins mentionnés ci-avant.

Dans ce document, des exemples de mise en œuvre de l'invention sont décrits dans le cadre d'une série d'un ou d'une pluralité de chiffrements ou déchiffrements exécutée par une carte à puce. L'invention ne se limite toutefois pas à ce cas particulier et peut être mise en œuvre plus généralement par un quelconque dispositif électronique (ordinateur ou autre) apte à réaliser les opérations et calculs nécessaires pour réaliser le procédé de l'invention.

Sauf indication contraire, les éléments communs ou analogues à plusieurs figures portent les mêmes signes de référence et présentent des caractéristiques identiques ou analogues, de sorte que ces éléments communs ne sont généralement pas à nouveau décrits par souci de simplicité.

La **figure 2** représente schématiquement la structure d'un dispositif 10 conforme à un mode de réalisation particulier de l'invention. On suppose ici que ce dispositif 10 est une carte à puce bien que d'autres implémentations soient possibles.

Le dispositif 10 est configuré pour réaliser un ou une pluralité de chiffrements 3DES ou, alternativement, un ou une pluralité de déchiffrements 3DES inverses (3DES⁻¹), comme décrit plus en détail ci-après.

Le dispositif 10 comprend un processeur 12, une mémoire non volatile 14 et une mémoire volatile (RAM) 16.

La mémoire 14 est une mémoire non volatile réinscriptible ou une mémoire morte (ROM), cette mémoire constituant un support d'enregistrement (ou support d'informations) conforme à un mode de réalisation particulier, lisible par le dispositif 10, et sur lequel est enregistré un programme d'ordinateur PG1 conforme à un mode de réalisation particulier. Ce programme d'ordinateur PG1 comporte des instructions pour l'exécution des étapes d'un procédé selon un mode de réalisation particulier. Les étapes de ce procédé sont décrites ci-après, selon divers modes de réalisation.

La mémoire 14 est notamment destinée à stocker les clés cryptographiques (nommées généralement K) utilisées lors de l'exécution des chiffrements et déchiffrements du procédé de l'invention. De manière générale, on considère que le dispositif 10 est configuré pour réaliser une série notée SR d'au moins un chiffrement triple DES (3DES) ou d'au moins un déchiffrement triple DES inverse (3DES⁻¹). Pour ce faire, le dispositif 10 met en œuvre un algorithme défini par des instructions stockées dans le programme d'ordinateur PG1. Le dispositif 10 exécute ainsi cette série SR en prenant en entrée des données d'entrée IN pour produire des données de sortie OU (correspondant au chiffrement ou déchiffrement des données d'entrée IN).

Pour ce faire, le processeur 12 piloté par le programme d'ordinateur PG1 peut en particulier mettre en œuvre un module d'exécution configuré pour exécuter successivement chaque chiffrement ou déchiffrement de cette série SR, soit selon un premier mode MD1, soit selon un deuxième mode MD2, comme décrit par la suite. Ces modes MD1 et MD2 sont décrits ci-après.

Toujours sous le contrôle du programme d'ordinateur PG1, le processeur 12 peut mettre en œuvre un module de sélection configuré pour sélectionner aléatoirement, pour chaque chiffrement ou déchiffrement de cette série SR, l'un parmi le premier mode MD1 et le deuxième mode MD2.

Comme décrit par la suite, diverses séries SR de chiffrements ou déchiffrements sont possibles dans le cadre de l'invention. Le dispositif 10 est configuré pour mettre en œuvre au moins un chiffrement 3DES ou, alternativement, au moins un déchiffrement 3DES inverse, en appliquant aléatoirement soit le premier mode MD1 soit le deuxième mode MD2. Des exemples particuliers sont décrits ultérieurement dans lesquels la série SR comprend une pluralité de chiffrements 3DES ou, alternativement, une pluralité de déchiffrements 3DES⁻¹.

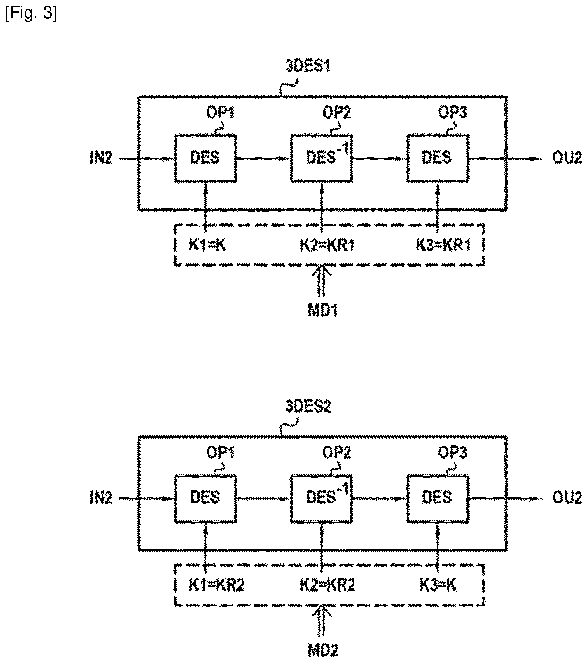

La **figure 3** représente schématiquement un chiffrement triple DES noté 3DES1 mis en œuvre par le dispositif 10 selon le premier mode MD1 et un chiffrement triple DES noté 3DES2 mis en œuvre également par le dispositif 10 selon le deuxième mode MD2. Dans cet exemple, on suppose que ces deux chiffrements 3DES1 et 3DES2 prennent en entrée des mêmes données d'entrée quelconques IN2 et génèrent en sortie des mêmes données de sortie OU2 qui constituent un chiffrement 3DES des données d'entrée IN2. Ces deux chiffrements 3DES1 et 3DES2 ne diffèrent pas par leurs résultats finaux mais par la manière dont ils sont réalisés.

Plus précisément, les chiffrements 3DES1 et 3DES2 comportent chacun une première opération OP1 de chiffrement de type DES, une deuxième opération OP2 de déchiffrement de type DES inverse (DES⁻¹) et une troisième opération OP3 de chiffrement de type DES. Ces opérations OP1, OP2 et OP3 sont réalisées successivement par le dispositif 10 à partir des données d'entrée IN2 en utilisant respectivement une première clé K1, une deuxième clé K2 et une troisième clé K3. Ainsi, les chiffrements 3DES1 et 3DES2 sont tel que :
- le chiffrement OP1 produit en sortie un chiffrement DES des données d'entrée IN2 à partir de la première clé K1,
- le déchiffrement OP2 prend en entrée le résultat du chiffrement OP1 pour produire à partir de la deuxième clé K2 un déchiffrement DES⁻¹ du résultat du chiffrement OP1, et
- le chiffrement OP3 prend en entrée le résultat du déchiffrement OP2 pour produire à partir de la troisième clé K3 un chiffrement DES du résultat du déchiffrement OP2.

Comme représenté dans l'exemple de la **figure 3****,** le chiffrement 3DES1 est réalisé selon le mode MD1, dans lequel la deuxième clé K2 et la troisième clés K3 sont des clés identiques de sorte que la deuxième opération OP2 et la troisième opération OP3 s'annulent mutuellement. Dans ce cas particulier, le chiffrement 3DES1 équivaut ainsi à un chiffrement DES (opération OP1) des données d'entrée IN2 à partir de la clé K1 qui fait alors office de clé effective. Les clés K2 et K3 étant identiques, les opérations OP2 et OP3 n'ont pas d'impact sur le résultat final du chiffrement 3DES1.

Dans ce document, une clé effective d'un chiffrement (ou déchiffrement) désigne une clé qui est effectivement utilisée lors de ce chiffrement (ou déchiffrement) de sorte à avoir un impact sur la transformation cryptographique globale générée par ledit chiffrement (ou déchiffrement) depuis les données d'entrée vers les données de sortie. Dans le cas particulier d'une série de chiffrements (ou une série de déchiffrements), une clé effective d'une telle série est une clé qui est effectivement utilisée au cours de cette série de sorte à avoir un impact sur la transformation cryptographique globale générée par la série depuis les données d'entrée de la série vers les données de sorties de la série.

A noter que les deuxième et troisième clés K2 et K3 prennent ici une même valeur notée KR1. Selon un exemple particulier, dans le premier mode MD1, la deuxième clé K2 et la troisième clé K3 sont des clés aléatoires identiques (autrement dit, la valeur KR1 est choisie de manière aléatoire). Le caractère aléatoire de ces clés rend plus difficile l'analyse par un tiers malveillant en vue d'en déduire les clés utilisées dans la mesure où les clés K2 et K3 varient aléatoirement.

Selon un exemple particulier, dans le premier mode MD1, la première clé K1 est différente de la deuxième clé K2 et de la troisième clé K3 (K1≠K2 er K1≠K3). Cette configuration particulière permet d'augmenter la sécurité du chiffrement.

Comme représenté aussi en **figure 3****,** le chiffrement 3DES2 est réalisé selon le mode MD2, dans lequel la première clé K1 et la deuxième clé K2 sont des clés identiques de sorte que la première opération OP1 et la deuxième opération OP2 s'annulent mutuellement. Dans ce cas particulier, le chiffrement 3DES2 équivaut ainsi à un chiffrement DES (opération OP3) des données d'entrée IN2 à partir de la clé K3 qui fait alors office de clé effective. Les clés K1 et K2 étant identiques, les opérations OP1 et OP2 n'ont pas d'impact sur le résultat final du chiffrement 3DES2.

Les première et deuxième clés K1 et K2 prennent ici une même valeur notée KR2. Selon un exemple particulier, dans le deuxième mode MD2, la première clé K1 et la deuxième clé K2 sont des clés aléatoires identiques (autrement dit, la valeur KR2 est choisie de manière aléatoire). Il est donc plus difficile pour un hackeur d'analyser les signaux électromagnétiques émis par le dispositif 10 en vue d'en déduire les clés utilisées. Ainsi, les deux clés identiques et aléatoires présentent des valeurs variables ce qui rend l'analyse des signaux plus complexe, notamment dans le cas où une pluralité d'itérations d'un chiffrement 3DES est réalisées.

Selon un exemple particulier, dans le deuxième mode MD2, la troisième clé K3 est différente de la première clé K1 et de la deuxième clé K2 (K3≠K1 er K3≠K2). Cette configuration particulière permet d'augmenter la sécurité du chiffrement.

En outre, en appliquant aléatoirement soit le mode MD1 soit le mode MD2, il n'est pas possible d'anticiper à l'avance laquelle parmi les clés K1 et K3 sera la clé effective utilisée pour réaliser l'opération effective de chiffrement DES lors d'un chiffrement 3DES. Lorsqu'une série d'une pluralité de chiffrements 3DES est réalisé en appliquant aléatoirement le mode MD1 ou MD2 à chaque chiffrement 3DES, il sera particulièrement difficile pour un tiers malveillant de déterminer quels sont les chiffrements DES effectifs dans la séquence et d'en déduire les clés effectives utilisées, ce qui permet de renforcer significativement la sécurité du chiffrement.

A noter que les modes MD1 et MD2 ont été décrits ci-dessus dans le cadre de chiffrements triples DES (3DES). L'application aléatoire de ces modes MD1 et MD2 est également possible de la même manière dans le cadre de déchiffrements de type triple DES inverse (3DES⁻¹).

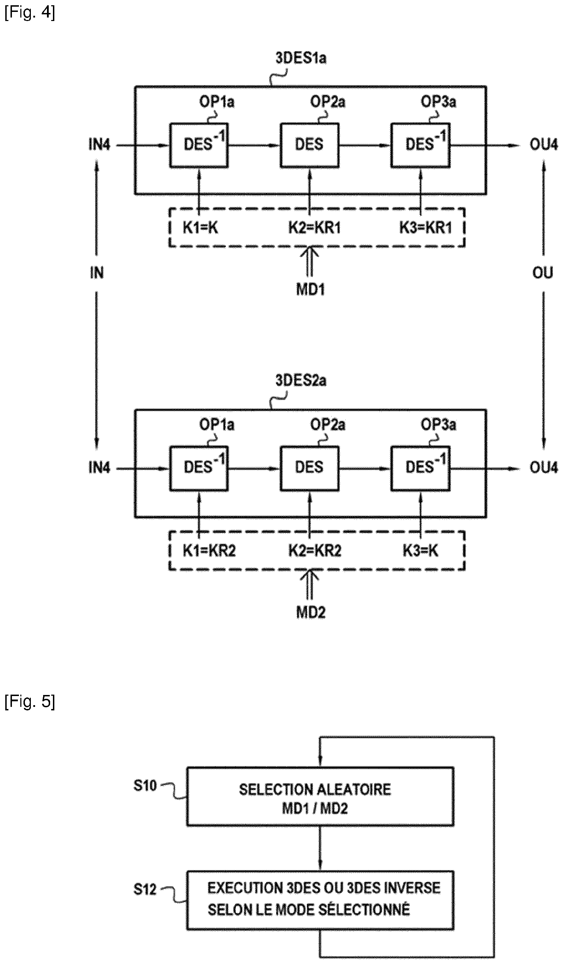

Ainsi, la **figure 4** représente schématiquement un déchiffrement triple DES inverse noté 3DES1a mis en œuvre par le dispositif 10 selon le premier mode MD1 et un déchiffrement triple DES inverse noté 3DES2a mis en œuvre également par le dispositif 10 selon le deuxième mode MD2. Dans cet exemple, on suppose que ces deux déchiffrements 3DES1a et 3DES2a prennent en entrée des mêmes données d'entrée quelconques IN4 (ces données IN4 étant chiffrées) et génèrent en sortie des mêmes données de sortie OU4 qui constituent un déchiffrement 3DES⁻¹ des données d'entrée IN4. Ces deux déchiffrements 3DES1a et 3DES2a ne diffèrent donc pas par leurs résultats finaux mais par la manière dont ils sont réalisés.

Plus précisément, les déchiffrements 3DES1a et 3DES2a comportent chacun une première opération OP1a de déchiffrement de type DES inverse (DES⁻¹), une deuxième opération OP2a de chiffrement de type DES et une troisième opération OP3a de déchiffrement de type DES inverse (DES⁻¹). Ces opérations OP1a, OP2a et OP3a sont réalisées successivement par le dispositif 10 à partir des données d'entrée IN4 en utilisant respectivement une première clé K1, une deuxième clé K2 et une troisième clé K3. Ainsi, les déchiffrements 3DES1a et 3DES1b sont tels que :
- le déchiffrement OP1a produit en sortie un déchiffrement DES⁻¹ des données d'entrée IN4 à partir de la première clé K1,
- le chiffrement OP2a prend en entrée le résultat d'OP1a pour produire à partir de la deuxième clé K2 un chiffrement DES du résultat d'OP1a, et
- le déchiffrement OP3a prend en entrée le résultat d'OP2a pour produire à partir de la troisième clé K3 un déchiffrement DES⁻¹ du résultat d'OP2a.

Comme représenté dans l'exemple de la **figure 4****,** le déchiffrement 3DES1a est réalisé selon le mode MD1, dans lequel la deuxième clé K2 et la troisième clés K3 sont des clés identiques de sorte que la deuxième opération OP2a et la troisième opération OP3a s'annulent mutuellement. Dans ce cas particulier, le déchiffrement 3DES1a équivaut ainsi à un déchiffrement DES⁻¹ (opération OP1a) des données d'entrée IN4 à partir de la clé K1 qui fait alors office de clé effective. Les clés K2 et K3 étant identiques, les opérations OP2a et OP3a n'ont pas d'impact sur le résultat final du déchiffrement 3DES1a.

A noter que les deuxième et troisième clés K2 et K3 prennent ici une même valeur notée KR1. Selon un exemple particulier, dans le premier mode MD1, la deuxième clé K2 et la troisième clé K3 sont des clés aléatoires identiques (autrement dit, la valeur KR1 est choisie de manière aléatoire). Le caractère aléatoire rend plus difficile l'analyse par un tiers malveillant en vue d'en déduire les clés utilisées dans la mesure où les clés K2 et K3 varient aléatoirement.

De façon analogue à ce qui est décrit ci-avant pour le chiffrement 3DES, le premier mode MD1 peut être réalisé de sorte que la première clé K1 est différente de la deuxième clé K2 et de la troisième clé K3 (K1≠K2 er K1≠K3). Cette configuration particulière permet d'augmenter la sécurité du chiffrement.

Comme représenté aussi en **figure 4****,** le déchiffrement 3DES2a est réalisé selon le mode MD2, dans lequel la première clé K1 et la deuxième clé K2 sont des clés identiques de sorte que la première opération OP1a et la deuxième opération OP2a s'annulent mutuellement. Dans ce cas particulier, le déchiffrement 3DES2a équivaut ainsi à un déchiffrement DES⁻¹ (opération OP3a) des données d'entrée IN4 à partir de la clé K3 qui fait alors office de clé effective. Les clés K1 et K2 étant identiques, les opérations OP1a et OP2a n'ont pas d'impact sur le résultat final du déchiffrement 3DES2a.

Les première et deuxième clés K1 et K2 prennent ici une même valeur notée KR2. Selon un exemple particulier, dans le deuxième mode MD2, la première clé K1 et la deuxième clé K2 sont des clés aléatoires identiques (autrement dit, la valeur KR2 est choisie de manière aléatoire). Il est donc plus difficile pour un hackeur d'analyser les signaux électromagnétiques émis par le dispositif 10 en vue d'en déduire les clés utilisées. Ainsi, les deux clés identiques et aléatoires présentent des valeurs variables ce qui rend l'analyse des signaux plus complexe, notamment dans le cas où une pluralité d'itérations d'un déchiffrement 3DES⁻¹ est réalisées.

De façon analogue à ce qui est décrit ci-avant pour le chiffrement 3DES, le deuxième mode MD2 peut être réalisé de sorte que, la troisième clé K3 est différente de la première clé K1 et de la deuxième clé K2 (K3≠K1 er K3≠K2). Cette configuration particulière permet d'augmenter la sécurité du chiffrement.

En outre, de même que dans l'exemple du chiffrement 3DES présenté en **figure 3****,** en appliquant aléatoirement soit le mode MD1 soit le mode MD2, il n'est pas possible d'anticiper à l'avance laquelle parmi les clés K1 et K3 sera la clé effective utilisée pour réaliser l'opération effective de déchiffrement DES⁻¹ lors du déchiffrement 3DES⁻¹. Lorsqu'une série d'une pluralité de déchiffrements 3DES⁻¹ est réalisée en appliquant aléatoirement le mode MD1 ou MD2 à chaque déchiffrement 3DES⁻¹, il sera difficile pour un tiers malveillant de déterminer quels sont les déchiffrements DES⁻¹ effectifs dans la séquence et d'en déduire la ou les clés effectives utilisées, ce qui permet de renforcer significativement la sécurité du déchiffrement.

On comprend au vu de ce qui précède que les modes MD1 et MD2 s'appliquent de façon analogue à un chiffrement triple DES et à un déchiffrement triple DES inverse. Ceci est possible car un chiffrement 3DES et un déchiffrement 3DES⁻¹ présentent une structure analogue : pour l'un comme pour l'autre la première opération (OP1/OP1a) et la troisième opération (OP3/OP3a) sont des opérations de type identique, de chiffrement ou de déchiffrement, tandis que la deuxième opération (OP2/OP2a) est une opération de type inverse aux première et troisième opérations. On comprendra que le dispositif 10 représenté en **figure** 2 n'est qu'un exemple de réalisation, d'autres mises en œuvre étant possibles dans le cadre de l'invention. Certains éléments généralement présents dans une carte à puce ont été volontairement omis car ils ne sont pas nécessaires à la compréhension de la présente invention. En outre, l'homme du métier comprendra que certains éléments du dispositif 10 ne sont décrits ici que pour faciliter la compréhension de l'invention, ces éléments n'étant pas nécessaires pour mettre en œuvre l'invention.

Un mode de réalisation particulier est à présent décrit en référence à la **figure 5****.** Plus précisément, le dispositif 10 décrit en référence aux **figures 2-4** met en œuvre un procédé de chiffrement ou de déchiffrement en exécutant le programme d'ordinateur PG1.

On suppose dans un premier exemple que ce procédé comprend un unique chiffrement 3DES ou un unique déchiffrement 3DES⁻¹.

Au cours d'une étape S10 de sélection, le dispositif 10 sélectionne aléatoirement soit le mode MD1 soit le mode MD2.

Au cours d'une étape S12 d'exécution, le dispositif 10 exécute un chiffrement triple DES (ou exécute un déchiffrement triple DES inverse) selon le mode sélectionné en S10, c'est-à-dire le mode MD1 ou MD2 selon le cas.

Selon un deuxième exemple, le dispositif 10 exécute une série de chiffrements 3DES (ou une série de déchiffrement 3DES⁻¹). Dans ce cas, le dispositif 10 peut sélectionner (S10) le mode MD1 ou MD2 à appliquer avant l'exécution (S12) de chaque chiffrement 3DES (ou déchiffrement 3DES) de la série. Autrement dit, le dispositif 10 réalise une sélection S10 distincte (ou indépendante) pour chaque chiffrement 3DES (ou déchiffrements 3DES⁻¹) de la série, ce qui permet de sécuriser le processus face à des éventuelles attaques.

En variante, une même sélection S10 peut s'appliquer pour plusieurs itérations de l'étape S12, c'est-à-dire pour une pluralité de chiffrements 3DES (ou déchiffrements 3DES inverses) de la série. Le dispositif 10 peut par exemple sélectionner (S10) aléatoirement un mode MD1 ou MD2 à appliquer pour chaque groupe de X chiffrements 3DES (ou déchiffrements 3DES inverses) de la série (X étant un nombre entier supérieur ou égal à 1). Ces sélections peuvent se faire toutes préalablement à l'exécution S12 ou au fur et à mesure de l'exécution S12 de la série.

Selon un exemple particulier, le dispositif 10 sélectionne (S10), préalablement à S12, un même mode MD1 ou MD2 - dit mode unique - à appliquer pour tous les chiffrements 3DES (ou déchiffrements 3DES inverses) de la série. Ainsi, lors de l'exécution S10, le dispositif 10 applique à chaque chiffrement 3DES (ou déchiffrement 3DES inverse) de la série le même mode unique sélectionné préalablement en S10. Cette variante permet de limiter les ressources nécessaires pour faire varier aléatoirement le mode MD1 ou MD2 appliqué dans une série, tout en conservant un niveau de sécurité renforcé.

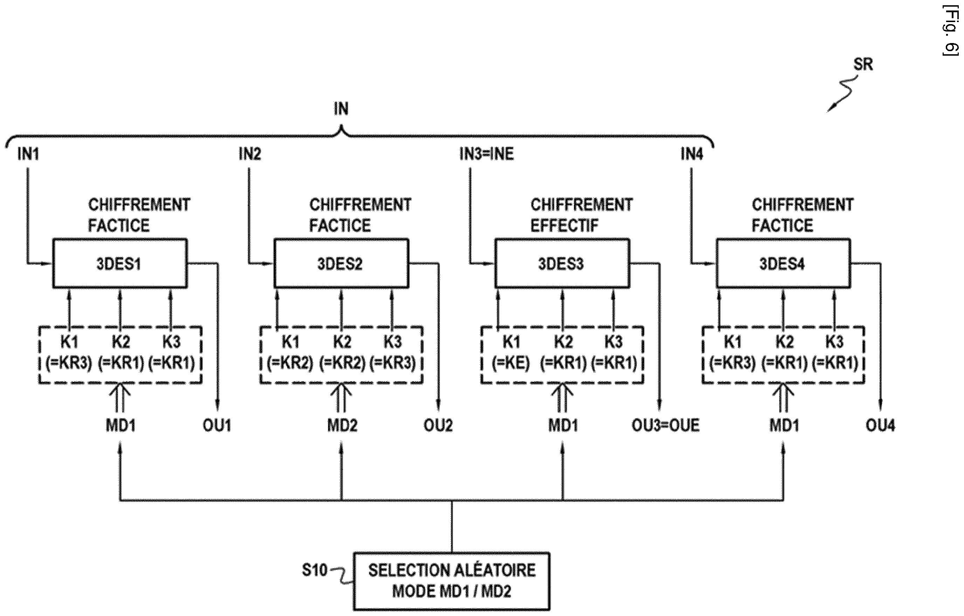

La **figure 6** représente un mode de réalisation particulier selon lequel le dispositif 10 décrit ci-avant en référence aux **figures 2-5** met en œuvre un procédé de chiffrement. Ce mode de réalisation s'applique par analogie à la mise en œuvre d'un procédé de déchiffrement, comme expliqué ci-après.

Dans cet exemple, une série SR d'une pluralité de chiffrements 3DES est exécutée par le dispositif 10 pour chiffrer des données d'entrées IN et ainsi obtenir en sortie des données chiffrées OU. Lors de cette série SR, n chiffrements de type triple DES sont réalisés (n étant un nombre entier au moins égal à 2) en appliquant aléatoirement soit le mode MD1 soit le mode MD2 pour chacun de ces chiffrements.

En outre, cette série SR comprend (n-1) chiffrements 3DES factices produisant des résultats factices et un unique chiffrement 3DES, dit chiffrement effectif, qui produit le résultat recherché OUE, à savoir le chiffrement 3DES de données d'entrée INE dite données d'entrée effectives.

En réalisant (n-1) chiffrements 3DES factices dans une série SR, il est possible de masquer (ou « noyer ») un chiffrement 3DES effectif que l'on souhaite réaliser. Il est en effet plus difficile pour un hackeur de détecter un chiffrement sensible et de le craquer si ce chiffrement est fondu dans une série comprenant au moins un autre chiffrement 3DES factice dont le résultat est sans importance. L'exécution d'un ou de plusieurs chiffrements factices augmente et complexifie les signaux électromagnétiques émis par le dispositif 10 lors de l'exécution de la série SR et rend donc l'analyse plus difficile et plus coûteuse en ressource pour un tiers malveillant, renforçant ainsi la sécurité du chiffrement.

Plus particulièrement, la sélection aléatoire d'un mode parmi MD1 et MD2 indépendamment pour chaque chiffrement 3DES, ou de façon commune pour un ou des groupes de chiffrements 3DES de la série SR, voire pour tous les chiffrements 3DES de la série SR, permet donc de renforcer la sécurité vis-à-vis d'une attaque comme déjà discutée sans augmenter le nombre n, ou de conserver un niveau de sécurité équivalent vis-à-vis de telles attaques tout en diminuant le nombre n et donc les ressources nécessaires (temps d'exécution, mémoire) du dispositif 10.

On considère en référence à la **figure 6** le cas particulier où n=4. Dans cet exemple, la série SR comprend ainsi successivement un premier chiffrement factice 3DES1, un deuxième chiffrement factice 3DES2, un unique chiffrement effectif 3DES3 et un troisième chiffrement factice 3DES4, chacun de ces chiffrements étant de type 3DES. Chacun de ces chiffrements 3DES1-3DES4 constitue une itération de la série SR.

On comprend que l'itération au cours de laquelle l'unique chiffrement effectif est réalisé dans la série SR (autrement dit, la position de ce chiffrement effectif dans la série SR) peut être adaptée selon le cas. Dans l'exemple représenté en **figure 6****,** le chiffrement effectif 3DES est donc le chiffrement 3DES3 situé en 3^{ème} position dans la séquence de la série SR.

Selon un exemple particulier, le dispositif 10 sélectionne aléatoirement la position (ou l'itération) du chiffrement effectif 3DES parmi la pluralité de chiffrements successifs 3DES.

Toujours dans l'exemple de la **figure 6****,** les chiffrements 3DES1, 3DES2, 3DES3 et 3DES4 prennent respectivement en entrée des données d'entrée IN1, IN2, IN3 et IN4 pour produire des données de sortie OU1, OU2, OU3 et OU4. Les données d'entrée IN3 sont donc considérées dans cet exemple comme les données d'entrée effective INE de la série SR. En outre, les données de sortie OU3 du chiffrement effectif 3DES3 sont les données de sortie effectives OUE de la série SR tandis que les données de sortie OU1, OU2 et OU4 sont des données de sortie factices visant à rendre plus difficile l'analyse de la série SR et la détection de la sortie effective OUE par un hackeur.

Conformément au principe de l'invention, chacun des chiffrements 3DES1, 3DES2, 3DES3 et 3DES4 de la série applique aléatoirement soit le mode MD1 soit le mode MD2, selon le mode qui est sélectionné au préalable en S10. Comme déjà décrit en référence à la **figure 5****,** cette sélection S10 peut être réalisée une fois et s'appliquer à l'ensemble des chiffrements de la série SR (de sorte que tous les chiffrements 3DES appliquent le même mode) ou peut être réalisée plusieurs fois par groupe d'au moins un chiffrement 3DES de la série SR de façon à ce que le même mode ainsi sélectionné s'applique à chaque chiffrement 3DES du groupe. Selon un exemple particulier, le dispositif 10 réalise une sélection aléatoire S10 indépendante pour chacun des chiffrements 3DES1-3DES4.

Dans l'exemple représenté en **figure 6****,** on suppose ainsi que les chiffrements 3DES1, 3DES3 et 3DES4 appliquent aléatoirement le mode MD1 tandis que le chiffrement 3DES2 applique aléatoirement le mode MD2. Conformément au mode MD1, chacun des chiffrements 3DES1, 3DES3 et 3DES4 est tel que sa deuxième clé K2 et sa troisième clé K3 sont des clés identiques notées KR1 (comme décrit en référence notamment à la **figure 3**). Dans cet exemple, les clés K2 et K3 sont en outre des clés aléatoires identiques (autrement dit, la clé KR1 représentant K2 et K3 est déterminée aléatoirement). De plus, comme déjà décrit, le premier mode MD1 peut être réalisé de sorte que la première clé K1 est différente de la deuxième clé K2 et de la troisième clé K3 (K1≠K2 er K1≠K3).

Le chiffrement effectif 3DES3 produit ainsi en tant que données de sortie effectives OU3 de la série SR un chiffrement DES des données d'entrée IN3 à partir de sa première clé K1, notée plus particulièrement KE.

De même, conformément au mode MD2, le chiffrement 3DES2 est tel que sa première clé K1 et sa deuxième clé K2 sont des clés identiques notées KR2. Comme déjà indiqué, dans cet exemple les clés K1 et K2 sont en outre des clés aléatoires identiques (autrement dit, la clé KR2 représentant K1 et K2 est déterminée aléatoirement). De plus, comme déjà décrit, le deuxième mode MD2 peut être réalisé de sorte que la troisième clé K3 est différente de la première clé K1 et de la deuxième clé K2 (K3≠K1 er K3≠K2).

En outre, les chiffrements factices 3DES1, 3DES2 et 3DES4 réalisées au cours de la série SR peuvent être chacun configurés de sorte qu'au moins l'une (ou les 2) parmi ces 2 conditions est satisfaite :
a) la clé autre que les 2 clés aléatoires identiques est une clé aléatoire factice (autrement dit, dans cet exemple : la première clé K1 des chiffrements factices 3DES1 et 3DES4 ainsi que la troisième clé K3 du chiffrement factice 3DES2 sont des clés factices notées KR3 choisies aléatoirement) ; et
b) les données d'entrée IN sont des données aléatoires factices (autrement dit, dans cet exemple : les données d'entrée IN1, IN2 et IN4 des chiffrements factices 3DES1, 3DES2 et 3DES4 sont des données factices choisies aléatoirement).

Ainsi, il est possible d'appliquer aux chiffrements factices de la série SR des clés factices aléatoires KR3 (condition a)) et/ou de faire prendre en entrée de ces chiffrements factices des données d'entrée factices aléatoires, afin de sécuriser encore davantage la série face à des attaques extérieures malveillantes.

Selon la condition a), chaque chiffrement 3DES factice opérant selon le mode MD1 est donc tel que sa première clé K1 est une clé factice aléatoire KR3, et chaque chiffrement 3DES factice opérant selon le mode MD2 est tel que sa troisième clé K3 est une clé factice aléatoire KR3. La clé factice KR3 peut être déterminée aléatoirement de façon indépendante pour chaque chiffrement factice 3DES (sécurité accrue) ou peut être déterminée aléatoirement une seule fois de sorte à ce que la même clé factice aléatoire KR3 soit appliquée dans chaque chiffrement 3DES factice (moins coûteux en ressource).

De même, selon la condition b), les données d'entrée factices IN peuvent être déterminées aléatoirement de façon indépendante pour chaque chiffrement 3DES factice (sécurité accrue) ou peuvent être déterminées aléatoirement une seule fois de sorte à ce que les mêmes données d'entrée factices soient prises en entrée de chaque chiffrement 3DES factice.

Un mode de réalisation particulier est à présent décrit en référence aux **figures 6-7****.** Plus précisément, le dispositif 10 décrit ci-avant en référence aux **figures 2-5** met en œuvre un procédé de chiffrement en exécutant le programme d'ordinateur PG1. Ce mode de réalisation s'applique par analogie à la mise en œuvre d'un procédé de déchiffrement.

Au cours d'une étape S20 d'obtention, le dispositif 10 obtient ou détermine des données d'entrée effectives INE de la série SR, c'est-à-dire les données d'entrée effectives que l'on souhaite faire chiffrer par la série SR. La manière dont ces données d'entrée effectives INE sont obtenue peut varier selon le cas. Le dispositif 10 réalise ensuite les étapes S22, S24 et S26 décrites ci-après. L'ordre dans lequel ces étapes S22, S24 et S26 sont réalisées peut varier selon le cas. En outre, l'une au moins parmi ces étapes S22, S24 et S26 (ces 3 étapes par exemple) peut être réalisée avant l'étape S20 d'obtention et/ou entre deux itérations de la série SR exécutée en S28 (par exemple S24).

Au cours d'une étape S22 de sélection, le dispositif 10 sélectionne aléatoirement l'itération au cours de laquelle le chiffrement 3DES effectif doit être exécuté dans la série SR. Autrement dit, le dispositif 10 choisit aléatoirement le chiffrement 3DES de la série SR qui constitue le chiffrement effectif. Dans l'exemple décrit ici, on considère que la troisième itération correspondant au troisième chiffrement 3DES3 de la série SR est sélectionnée (S22) pour réaliser le chiffrement effectif. Cette sélection aléatoire S22 rend difficile l'identification pour une entité externe du moment dans la série SR où le chiffrement effectif est réalisé, ce qui permet de sécuriser le chiffrement.

Au cours d'une étape S24 de sélection, le dispositif 10 sélectionne de façon aléatoire des clés factices KR3 à appliquer à chaque chiffrement factice 3DES1, 3DES2 et 3DES4, de sorte à être utilisée en tant que première clé K1 dans le premier mode MD1 (pour les chiffrements 3DES1 et 3DES4) et en tant que troisième clé K3 dans le deuxième mode MD2 (pour le chiffrement 3DES2). Selon un exemple particulier, une nouvelle clé factice KR3 est sélectionnée aléatoirement (S24), et de façon indépendante, pour chaque chiffrement factice de sorte à être utilisée en tant que première clé K1 dans le premier mode MD1 et en tant que troisième clé K3 dans le deuxième mode MD2. En d'autres termes, une sélection aléatoire S24 est réalisée indépendamment pour chaque chiffrement factice 3DES1, 3DES2 et 3DES4 à venir (de sorte que les clés factices KR3 peuvent varier d'une itération à une autre).

D'autres implémentations sont toutefois possibles dans lesquelles, par exemple, une même clé factice KR3 est déterminée aléatoirement une seule fois et appliquée dans chaque itération de la série SR, c'est-à-dire à chacun des chiffrements factices 3DES1, 3DES2 et 3DES4 à venir (moins coûteux en ressource).

Selon une variante, lors de l'étape S24 de sélection, la clé factice prise en entrée dans chaque chiffrement factice 3DES1, 3DES2 et 3DES4 est définie de sorte à être identique à la clé effective KE prise en entrée dans l'unique chiffrement effectif 3DES3 de la série SR.

Au cours d'une étape S26 de définition, le dispositif 10 définit de façon aléatoire les données d'entrée IN1, IN2 et IN4, dites données d'entrée factices, que doivent prendre en entrée respectivement chaque chiffrement factice 3DES1, 3DES2 et 3DES4 de la série SR. Dans cet exemple, une telle sélection aléatoire S26 est répétée indépendamment pour chaque chiffrement factice 3DES1, 3DES2 et 3DES4 à venir (de sorte que les données d'entrée factices peuvent varier d'une itération à une autre). D'autres implémentations sont toutefois possibles dans lesquelles, par exemple, des mêmes données d'entrée factices IN sont déterminées aléatoirement et appliquées à chacun des chiffrements factices 3DES1, 3DES2 et 3DES4 à venir (moins coûteux en ressource).

Selon une variante, lors de l'étape S26 de définition, les premières données IN prises en entrée dans chaque chiffrement factice 3DES1, 3DES2 et 3DES4 sont définies de sorte à être identiques aux données d'entrée effectives INE prises en entrée dans l'unique chiffrement effectif 3DES3 de la série SR.

Comme déjà indiqué, il est possible de ne réaliser que l'une quelconque parmi les 2 étapes S24 et S26 de sortie à diminuer le coût en ressources nécessaires. De même, l'étape S22 de sélection peut en variante être réalisée en sélectionnant une itération prédéfinie (et non de façon aléatoire) afin de limiter le cout en ressource.

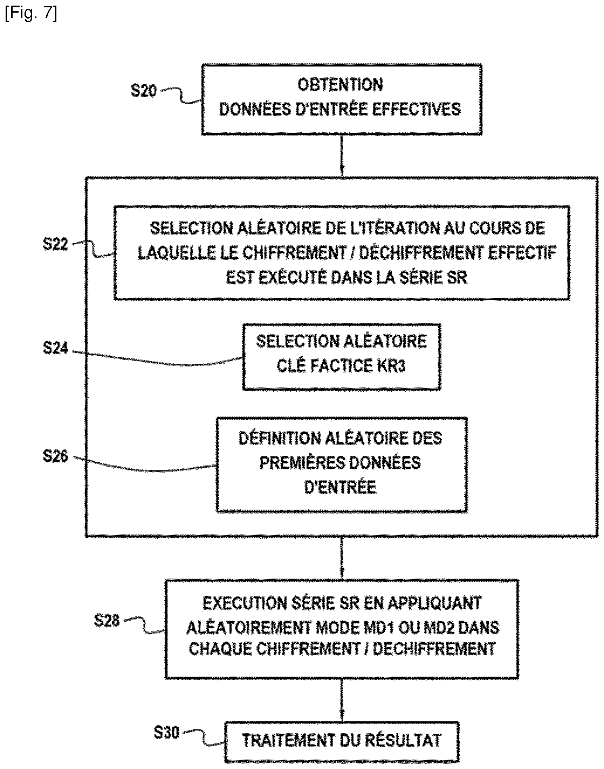

Une fois les étapes S20-S26 effectuées, le dispositif 10 exécute (S28, **figure 7**) la série SR telle que représentée en **figure 6****,** cette série comportant successivement les chiffrements factices 3DES1 et 3DES2, le chiffrement effectif 3DES3 et le chiffrement factice 3DES4. De façon générale, cette série SR prend en entrée les données d'entrées effectives INE (i.e. IN3 dans cet exemple) et génère en sortie les données de sortie effectives OUE (i.e. OU3 dans cet exemple).

Comme déjà décrit, au cours de cette série SR, le dispositif 10 applique aléatoirement soit le mode MD1 soit le mode MD2 à chacun des chiffrements 3DES1-3DES4, ce qui rend l'analyse difficile pour un hackeur.

Un mode unique parmi les premier et deuxième modes MD1 et MD2 peut être sélectionné aléatoirement (S10, **figure 5**), préalablement à l'étape S28 d'exécution, pour être appliquer à l'ensemble des chiffrements 3DES1-3DES4 de la série SR ou, alternativement, une sélection aléatoire S10 distincte peut être réalisée pour chaque chiffrement 3DES de la série SR.

Lors de l'exécution de la série SR, les chiffrements factices 3DES1, 3DES2 et 3DES4 produisent ainsi respectivement, à partir des données d'entrée factices IN1, IN2 et IN4 et des clés factices KR3, des données de sortie factices OU1, OU2 et OU4 qui peuvent être ignorées par le dispositif 10. En outre, la sortie OU3 du chiffrement effectif 3DES3 constitue ici les données de sortie effective OUE de la série SR. Le chiffrement effectif 3DES3 produit ici en tant que données de sortie effectives OUE de la série SR un chiffrement DES des données d'entrée IN3 à partir de sa première clé K1, notée plus particulièrement KE.

Au cours d'une étape S30 de traitement, le dispositif 10 identifie ainsi les données de sortie OU3 en tant que données de sortie effectives INE de la série SR. Le dispositif 10 peut en outre réaliser (S30) un traitement prédéfini, tel que par exemple un enregistrement ou/et une transmission, en tant que résultat de la série SR, des données de sortie effectives OU3 générées par l'unique chiffrement effectif 3DES3. Le dispositif 10 peut par exemple transmettre le résultat à un terminal externe ou enregistrer le résultat dans une mémoire locale telle que la mémoire 14.

Comme déjà indiqué, les divers exemples et variantes de réalisation décrits ci-avant en référence aux **figures 6** et **7** peuvent s'appliquer par analogie à une série notée SRa d'une pluralité de déchiffrements 3DES inverses (3DES⁻¹). Autrement dit, une telle série SRa peut être réalisée de façon identique à la série SR tel que décrit en référence aux **figures 6** et **7****,** à la différence que les chiffrements 3DES1, 3DES2, 3DES3 et 3DES4 sont remplacés par des déchiffrements triple DES inverse notés respectivement 3DES1a, 3DES2a, 3DES3a et 3DES4a. Ainsi, la série SRa peut comprendre 3 déchiffrements factices 3DES1a, 3DES2a et 3DES4a et un déchiffrement effectif 3DES3a dont la sortie OU3 constitue les données de sortie effectives OUE de la série SRa. Comme déjà décrit, le mode MD1 ou MD2 est ainsi sélectionné et appliqué aléatoirement dans chaque déchiffrement 3DES1a-3DES4a de cette série SRa. En outre, l'itération au cours de laquelle le déchiffrement 3DES⁻¹ effectif est réalisé dans la série SRa peut être sélectionnée (S22) aléatoirement avant exécution de ladite série. En particulier, les étapes S20 à S30 telles que décrites ci-avant en référence aux **figures 6-7** peuvent s'appliquer de façon analogue à une série SRa de déchiffrements 3DES⁻¹ de sorte à masquer un déchiffrement 3DES⁻¹ effectif avec au moins un autre déchiffrement 3DES⁻¹ factice présent dans la série SRa.

Un homme du métier comprendra que les modes de réalisation et variantes décrits ci-avant ne constituent que des exemples non limitatifs de mise en œuvre de l'invention. En particulier, l'homme du métier pourra envisager une quelconque adaptation ou combinaison des modes de réalisation et variantes décrits ci-avant afin de répondre à un besoin bien particulier. L'étendue de la protection couverte par ce document de brevet est définie par les revendications.

## Revendications

1. Procédé de chiffrement ou de déchiffrement, comprenant une série (SR) d'au moins un chiffrement (3DES1-3DES4) de type triple DES ou d'au moins un déchiffrement (3DES1a, 3DES2a,) de type triple DES inverse, chaque chiffrement ou déchiffrement prenant en entrée des données d'entrée (IN) et comportant une première, deuxième et troisième opération (OP1, OP2, OP3) de type DES ou DES inverse qui sont réalisées successivement en utilisant respectivement une première, deuxième et troisième clé (K1, K2, K3),
dans lequel les première et troisième opérations sont des opérations de type identique, de chiffrement ou de déchiffrement, tandis que la deuxième opération est une opération de type inverse aux première et troisième opérations, ledit procédé comprenant :
- exécution (S12 ; S28) de chaque chiffrement ou déchiffrement de ladite série, soit selon un premier mode (MD1) dans lequel les deuxième et troisième clés (K2, K3) sont des clés identiques (KR1), différentes de la première clé (K1), de sorte que les deuxième et troisième opérations (OP2, OP3) s'annulent mutuellement, soit selon un deuxième mode (MD2) dans lequel les première et deuxième clés (K1, K2) sont des clés identiques (KR2), différentes de la troisième clé (K3), de sorte que les première et deuxième opérations (OP1, OP2) s'annulent mutuellement,
- l'un parmi le premier mode (MD1) et le deuxième mode (MD2) étant sélectionné de façon aléatoire pour chaque chiffrement ou déchiffrement de ladite série.

2. Procédé selon la revendication 1, dans lequel la série comprend :
- une pluralité de chiffrements de type triple DES, les première et troisième opérations étant des opérations de chiffrement de type DES et la deuxième opération étant une opération de déchiffrement de type DES inverse ; ou
- une pluralité de déchiffrements de type triple DES inverse, les première et troisième opérations étant des opérations de déchiffrement de type DES inverse et la deuxième opération étant une opération de chiffrement de type DES.

3. Procédé selon la revendication 1 ou 2, dans lequel un mode commun respectif est sélectionné de façon indépendante, pour chaque groupe de X chiffrement(s) ou déchiffrement(s) de la série, parmi le premier mode et le deuxième mode aléatoirement, préalablement à l'exécution de ladite série, X étant un nombre entier supérieur ou égal à 1, chaque mode commun respectif étant appliqué à chaque chiffrement ou déchiffrement du groupe correspondant.

4. Procédé selon l'une quelconque des revendications 1 à 3, dans lequel un mode unique, parmi le premier mode et le deuxième mode, est sélectionné aléatoirement préalablement à l'exécution de ladite série, ledit mode unique étant appliqué à chaque chiffrement ou déchiffrement de ladite série.

5. Procédé selon l'une quelconque des revendications 1 à 4, dans lequel l'exécution est telle que :
- dans le premier mode (MD1), les deuxième et troisième clés (K2, K3) sont des clés aléatoires identiques (KR1) ; et
- dans le deuxième mode (MD2), les première et deuxième clés (K1, K2) sont des clés aléatoires identiques (KR2).

6. Procédé selon l'une quelconque des revendications 1 à 5, dans lequel la série comprend une pluralité de chiffrements (3DES1-3DES4) successifs de type triple DES ou de déchiffrements successifs de type triple DES inverse, le procédé comprenant :
- obtention de données d'entrée effectives (INE) à chiffrer ou déchiffrer ;
dans lequel, lors de ladite série :
- au moins un chiffrement factice (3DES1, 3DES2, 3DS4) ou déchiffrement factice prenant chacun en entrée des premières données d'entrée (IN) est réalisé en appliquant aléatoirement le premier ou second mode (IN1, IN2, IN4), de sorte que dans le premier mode la première clé (K1) est une clé factice (KR3) choisie aléatoirement et dans le deuxième mode la troisième clé (K3) est une clé factice (KR3) choisie aléatoirement ; et
- un unique chiffrement effectif ou déchiffrement effectif (3DES3) prenant en entrée les données d'entrée effectives (INE) est réalisé en appliquant aléatoirement le premier ou le second mode (MD1, MD2) pour chiffrer ou déchiffrer les données d'entrées effectives, de sorte que dans le premier mode la première clé (K1) est une clé effective (KE) sélectionnée pour chiffrer ou déchiffrer lesdites données d'entrées effectives et dans le deuxième mode la troisième clé (K3) est une clé effective (KE) sélectionnée pour chiffrer ou déchiffrer lesdites deuxièmes données d'entrées.

7. Procédé selon la revendication 6, dans lequel ladite clé factice est identique pour chaque chiffrement factice ou déchiffrement factice, ladite clé factice étant sélectionnée aléatoirement préalablement à l'exécution de ladite série.

8. Procédé selon la revendication 6, dans lequel une nouvelle clé factice est sélectionnée aléatoirement de façon indépendante pour chaque chiffrement factice ou déchiffrement factice de sorte à être utilisée en tant que première clé dans le premier mode et en tant que troisième clé dans le deuxième mode.

9. Procédé selon l'une quelconque des revendications 6 à 8, dans lequel les premières données prises en entrée dans chaque chiffrement factice ou déchiffrement factice sont définies de sorte à être identiques aux données d'entrée effectives prises en entrée dans l'unique chiffrement effectif ou déchiffrement effectif.

10. Procédé selon l'une quelconque des revendications 6 à 8, dans lequel les premières données prises en entrée dans chaque chiffrement factice ou déchiffrement factice sont définies de façon aléatoire.

11. Procédé selon la revendication 10, dans lequel les premières données sont définies aléatoirement préalablement à l'exécution de ladite série de façon à être identiques pour chaque chiffrement factice ou déchiffrement factice de ladite série.

12. Procédé selon la revendication 10, dans lequel les premières données sont définies aléatoirement et de façon indépendante pour chaque chiffrement factice ou déchiffrement factice de ladite série.

13. Procédé selon l'une quelconque des revendications 1 à 5, dans lequel ladite série comprend une pluralité de chiffrements successifs de type triple DES ou de déchiffrements successifs de type triple DES inverse, le procédé comprenant :
- obtention de données d'entrée effectives (IN3) à chiffrer ou déchiffrer ;
dans lequel, lors de ladite série :
- au moins un chiffrement factice (3DES1, 3DES2, 3DS4) ou déchiffrement factice prenant chacun en entrée des données factices aléatoires est réalisé en appliquant aléatoirement le premier ou second mode (MD1, MD2) ; et
- un unique chiffrement effectif ou déchiffrement effectif (3DES3) prenant en entrée les données d'entrée effectives (IN3) est réalisé en appliquant aléatoirement le premier ou le second mode (MD1, MD2) pour chiffrer ou déchiffrer les données d'entrée effectives.

14. Programme d'ordinateur (PG1) comportant des instructions pour l'exécution des étapes d'un procédé selon l'une quelconque des revendications 1 à 13 lorsque ledit programme est exécuté par un ordinateur.

15. Dispositif de chiffrement ou de déchiffrement, configuré pour exécuter une série d'au moins un chiffrement (3DES1-3DES 4) de type triple DES ou d'au moins un déchiffrement (3DES1a,3DES 2a) de type triple DES inverse, chaque chiffrement ou déchiffrement prenant en entrée des données d'entrée (IN) et comportant une première, deuxième et troisième opération (OP1, OP2, OP3) de type DES ou DES inverse qui sont réalisées successivement en utilisant respectivement une première, deuxième et troisième clé (K1, K2, K3),
dans lequel les première et troisième opérations sont des opérations de type identique, de chiffrement ou de déchiffrement, tandis que la deuxième opération est une opération de type inverse aux première et troisième opérations,
ledit dispositif comprenant :
- un module d'exécution pour exécuter chaque chiffrement ou déchiffrement de ladite série, soit selon un premier mode (MD1) dans lequel les deuxième et troisième clés (K2, K3) sont des clés identiques (KR1), différentes de la première clé (K1), de sorte que les deuxième et troisième opérations (OP2, OP3) s'annulent mutuellement, soit selon un deuxième mode (MD2) dans lequel les première et deuxième clés (K1, K2) sont des clés identiques (KR2, KR2), différentes de la troisième clé (K3), de sorte que les première et deuxième opérations (OP1, OP2) s'annulent mutuellement ; et
- un module de sélection pour sélectionner de façon aléatoire l'un parmi le premier mode (MD1) et le deuxième mode (MD2) à appliquer pour chaque chiffrement ou déchiffrement de ladite série.

## Patentansprüche

1. Verfahren zur Verschlüsselung oder zur Entschlüsselung,
umfassend eine Reihe (SR) von mindestens einer Verschlüsselung (3DES1-3DES4) des Typs Dreifach-DES oder von mindestens einer Entschlüsselung (3DES1a, 3DES2a) des Typs Dreifach-DES invers, wobei jede Verschlüsselung oder Entschlüsselung am Eingang Eingangsdaten (IN) empfängt und einen ersten, einen zweiten und einen dritten Vorgang (OP1, OP2, OP3) des Typs DES oder DES invers beinhaltet, die nacheinander umgesetzt werden, indem jeweils ein erster, ein zweiter und ein dritter Schlüssel (K1, K2, K3) verwendet wird,
wobei der erste und der dritte Vorgang Vorgänge vom identischen Typ zur Verschlüsselung oder zur Entschlüsselung sind, während der zweite Vorgang ein Vorgang vom Typ invers zu dem ersten und dem dritten Vorgang ist, wobei das Verfahren umfasst:
- Ausführen (S12; S28) jeder Verschlüsselung oder Entschlüsselung der Reihe entweder gemäß einem ersten Modus (MD1), in dem der zweite und der dritte Schlüssel (K2, K3) identische Schlüssel (KR1) sind, die sich von dem ersten Schlüssel (K1) unterscheiden, sodass sich der zweite und der dritte Vorgang (OP2, OP3) gegenseitig aufheben, oder gemäß einem zweiten Modus (MD2), in dem der erste und der zweite Schlüssel (K1, K2) identische Schlüssel (KR2) sind, die sich von dem dritten Schlüssel (K3) unterscheiden, sodass sich der erste und der zweite Vorgang (OP1, OP2) gegenseitig aufheben,
- wobei einer von dem ersten Modus (MD1) und dem zweiten Modus (MD2) auf zufällige Weise für jede Verschlüsselung oder Entschlüsselung der Reihe ausgewählt wird.

2. Verfahren nach Anspruch 1, wobei die Reihe umfasst:
- mehrere Verschlüsselungen des Typs Dreifach-DES, wobei der erste und der dritte Vorgang Vorgänge zur Verschlüsselung des Typs DES sind und der zweite Vorgang ein Vorgang zur Entschlüsselung des Typs DES invers ist, oder
- mehrere Entschlüsselungen des Typs Dreifach-DES invers, wobei der erste und der dritte Vorgang Vorgänge zur Entschlüsselung des Typs DES invers sind und der zweite Vorgang ein Vorgang zur Verschlüsselung des Typs DES ist.

3. Verfahren nach Anspruch 1 oder 2, wobei ein jeweiliger gemeinsamer Modus auf unabhängige Weise für jede Gruppe von X Verschlüsselung(en) oder Entschlüsselung(en) der Reihe zufällig aus dem ersten Modus und dem zweiten Modus vor der Ausführung der Reihe ausgewählt wird, wobei X eine ganze Zahl größer als oder gleich 1 ist, wobei jeder jeweilige gemeinsame Modus auf jede Verschlüsselung oder Entschlüsselung der entsprechenden Gruppe angewandt wird.

4. Verfahren nach einem der Ansprüche 1 bis 3, wobei ein einmaliger Modus aus dem ersten Modus und dem zweiten Modus zufällig vor der Ausführung der Reihe ausgewählt wird, wobei der einmalige Modus auf jede Verschlüsselung oder Entschlüsselung der Reihe angewandt wird.

5. Verfahren nach einem der Ansprüche 1 bis 4, wobei die Ausführung derart ist, dass:
- in dem ersten Modus (MD1) der zweite und der dritte Schlüssel (K2, K3) zufällige identische Schlüssel (KR1) sind, und
- in dem zweiten Modus (MD2) der erste und der zweite Schlüssel (K1, K2) zufällige identische Schlüssel (KR2) sind.

6. Verfahren nach einem der Ansprüche 1 bis 5, wobei die Reihe mehrere aufeinanderfolgende Verschlüsselungen (3DES1-3DES4) des Typs Dreifach-DES oder aufeinanderfolgende Entschlüsselungen des Typs Dreifach-DES invers umfasst, wobei das Verfahren umfasst:
- Erhalten von effektiven Eingangsdaten (INE) zum Verschlüsseln oder Entschlüsseln, wobei während der Reihe:
- mindestens eine fiktive Verschlüsselung (3DES1, 3DES2, 3DES4) oder fiktive Entschlüsselung, die jeweils am Eingang erste Eingangsdaten (IN) empfängt, umgesetzt wird, indem zufällig der erste oder der zweite Modus (IN1, IN2, IN4) angewandt wird, sodass in dem ersten Modus der erste Schlüssel (K1) ein fiktiver Schlüssel (KR3) ist, der zufällig ausgewählt wird, und in dem zweiten Modus der dritte Schlüssel (KR3) ein fiktiver Schlüssel (KR3) ist, der zufällig ausgewählt wird, und
- eine einmalige effektive Verschlüsselung oder effektive Entschlüsselung (3DES3), die am Eingang die effektiven Eingangsdaten (INE) empfängt, umgesetzt wird, indem zufällig der erste oder der zweite Modus (MD1, MD2) angewandt wird, um die effektiven Eingangsdaten zu verschlüsseln oder zu entschlüsseln, sodass in dem ersten Modus der erste Schlüssel (K1) ein effektiver Schlüssel (KE) ist, der ausgewählt wird, um die effektiven Eingangsdaten zu verschlüsseln oder zu entschlüsseln, und in dem zweiten Modus der dritte Schlüssel (K3) ein effektiver Schlüssel (KE) ist, der ausgewählt wird, um die zweiten Eingangsdaten zu verschlüsseln oder zu entschlüsseln.

7. Verfahren nach Anspruch 6, wobei der fiktive Schlüssel für jede fiktive Verschlüsselung oder fiktive Entschlüsselung identisch ist, wobei der fiktive Schlüssel zufällig vor der Ausführung der Reihe ausgewählt wird.

8. Verfahren nach Anspruch 6, wobei ein neuer fiktiver Schlüssel zufällig auf unabhängige Weise für jede fiktive Verschlüsselung oder fiktive Entschlüsselung ausgewählt wird, um als erster Schlüssel in dem ersten Modus und als dritter Schlüssel in dem zweiten Modus verwendet zu werden.

9. Verfahren nach einem der Ansprüche 6 bis 8, wobei die ersten Daten, die am Eingang in jeder fiktiven Verschlüsselung oder fiktiven Entschlüsselung empfangen werden, definiert werden, sodass sie mit den effektiven Eingangsdaten identisch sind, die am Eingang in der einmaligen effektiven Verschlüsselung oder effektiven Entschlüsselung empfangen werden.

10. Verfahren nach einem der Ansprüche 6 bis 8, wobei die ersten Daten, die am Eingang in jeder fiktiven Verschlüsselung oder fiktiven Entschlüsselung empfangen werden, auf zufällige Weise definiert werden.

11. Verfahren nach Anspruch 10, wobei die ersten Daten zufällig vor der Ausführung der Reihe definiert werden, sodass sie für jede fiktive Verschlüsselung oder fiktive Entschlüsselung der Reihe identisch sind.

12. Verfahren nach Anspruch 10, wobei die ersten Daten zufällig und auf unabhängige Weise für jede fiktive Verschlüsselung oder fiktive Entschlüsselung der Reihe definiert werden.

13. Verfahren nach einem der Ansprüche 1 bis 5, wobei die Reihe mehrere aufeinanderfolgende Verschlüsselungen des Typs Dreifach-DES oder aufeinanderfolgende Entschlüsselungen des Typs Dreifach-DES invers umfasst, wobei das Verfahren umfasst:
- Erhalt von effektiven Eingangsdaten (IN3) zum Verschlüsseln oder Entschlüsseln, wobei während der Reihe:
- mindestens eine fiktive Verschlüsselung (3DES1, 3DES2, 3DES4) oder fiktive Entschlüsselung, die jeweils am Eingang zufällige fiktive Daten empfängt, umgesetzt wird, indem zufällig der erste oder der zweite Modus (MD1, MD2) angewandt wird, und
- eine eindeutige effektive Verschlüsselung oder effektive Entschlüsselung (3DES3), die am Eingang die effektiven Eingangsdaten (IN3) empfängt, umgesetzt wird, indem zufällig der erste oder der zweite Modus (MD1, MD2) angewandt wird, um die effektiven Eingangsdaten zu verschlüsseln oder zu entschlüsseln.

14. Computerprogramm (PG1), das Anweisungen zur Ausführung der Schritte eines Verfahrens nach einem der Ansprüche 1 bis 13 beinhaltet, wenn das Programm von einem Computer ausgeführt wird.

15. Vorrichtung zur Verschlüsselung oder zur Entschlüsselung, die dazu ausgestaltet ist, eine Reihe von mindestens einer Verschlüsselung (3DES1-3DES4) des Typs Dreifach-DES oder von mindestens einer Entschlüsselung (3DES1a, 3DES2a) des Typs Dreifach-DES invers auszuführen, wobei jede Verschlüsselung oder Entschlüsselung am Eingang Eingangsdaten (IN) empfängt und einen ersten, einen zweiten und einen dritten Vorgang (OP1, OP2, OP3) des Typs DES oder DES invers beinhaltet, die nacheinander umgesetzt werden, indem jeweils ein erster, ein zweiter und ein dritter Schlüssel (K1, K2, K3) verwendet wird,
wobei der erste und der dritte Vorgang Vorgänge vom identischen Typ zur Verschlüsselung oder zur Entschlüsselung sind, während der zweite Vorgang ein Vorgang vom Typ invers zu dem ersten und dem dritten Vorgang ist,
wobei die Vorrichtung umfasst:
- ein Ausführungsmodul zur Ausführung jeder Verschlüsselung oder Entschlüsselung der Reihe entweder gemäß einem ersten Modus (MD1), in dem der zweite und der dritte Schlüssel (K2, K3) identische Schlüssel (KR1) sind, die sich von dem ersten Schlüssel (K1) unterscheiden, sodass sich der zweite und der dritte Vorgang (OP2, OP3) gegenseitig aufheben, oder gemäß einem zweiten Modus (MD2), in dem der erste und der zweite Schlüssel (K1, K2) identische Schlüssel (KR2, KR2) sind, die sich von dem dritten Schlüssel (K3) unterscheiden, sodass sich der erste und der zweite Vorgang (OP1, OP2) gegenseitig aufheben, und
- ein Auswahlmodul zum Auswählen von einem von dem ersten Modus (MD1) und dem zweiten Modus (MD2) auf zufällige Weise zum Anwenden für jede Verschlüsselung oder Entschlüsselung der Reihe.

## Claims

1. An encryption or decryption method comprising a series (SR) of at least one encryption (3DES1-3DES4) of triple DES type or at least one decryption (3DES1a, 3DES2a,) of triple inverse DES type, each encryption or decryption inputting input data (IN) and comprising a first, second and third operation (OP1, OP2, OP3) of DES or inverse DES type which are carried out successively by using respectively a first, second and third key (K1, K2, K3),
wherein the first and third operations are encryption or decryption operations of identical type, whereas the second operation is an operation of type inverse to the first and third operations, said method comprising:
- execution (S12; S28) of each encryption or decryption of said series, either according to a first mode (MD1) wherein the second and third keys (K2, K3) are identical keys (KR1), different to the first key (K1), such that the second and third operations (OP2, OP3) cancel each other out, or according to a second mode (MD2) wherein the first and second keys (K1, K2) are identical keys (KR2), different to the third key (K3), such that the first and second operations (OP1, OP2) cancel each other out,
- one of the first mode (MD1) and the second mode (MD2) being selected randomly for each encryption or decryption of said series.

2. The method according to claim 1, wherein the series comprises:
- a plurality of encryptions of triple DES type, the first and third operations being encryption operations of DES type and the second operation being a decryption operation of inverse DES type; or
- a plurality of decryptions of triple inverse DES type, the first and third operations being decryption operations of inverse DES type and the second operation being an encryption operation of DES type.

3. The method according to claim 1 or 2, wherein a respective common mode is selected independently, for each group of X encryption(s) or decryption(s) of the series, from the first mode and the second mode randomly, prior to the execution of said series, X being a whole number greater than or equal to 1,
each respective common mode being applied to each encryption or decryption of the corresponding group.

4. The method according to any one of claims 1 to 3, wherein a single mode from the first mode and the second mode is selected randomly prior to the execution of said series, said single mode being applied to each encryption or decryption of said series.

5. The method according to any one of claims 1 to 4, wherein the execution is such that:
- in the first mode (MD1) the second and third keys (K2, K3) are identical random keys (KR1); and
- in the second mode (MD2) the first and second keys (K1, K2) are identical random keys (KR2).

6. The method according to any one of claims 1 to 5, wherein the series comprises a plurality of successive encryptions (3DES1-3DES4) of triple DES type or of successive decryptions of triple inverse DES type, the method comprising:
- obtaining of real input data (INE) to be encrypted or decrypted, wherein, during said series:
- at least one fake encryption (3DES1, 3DES2, 3DS4) or fake decryption each inputting first input data (IN) is carried out by randomly applying the first or second mode (IN1, IN2, IN4), such that in the first mode the first key (K1) is a fake key (KR3) selected randomly and in the second mode the third key (K3) is a fake key (KR3) selected randomly; and
- a single real encryption or real decryption (3DES3) inputting the real input data (INE) is carried out by randomly applying the first or the second mode (MD1, MD2) for encrypting or decrypting the effectives input data, such that in the first mode the first key (K1) is a real key (KE) selected to encrypt or decrypt said real input data and in the second mode the third key (K3) is a real key (KE) selected to encrypt or decrypt said second input data.

7. The method according to claim 6, wherein said fake key is identical for each fake encryption or fake decryption, said fake key being selected randomly prior to the execution of said series.

8. The method according to claim 6, wherein a new fake key is selected randomly independently for each fake encryption or fake decryption so as to be utilised as first key in the first mode and as third key in the second mode.

9. The method according to any one of claims 6 to 8, wherein the first data input in each fake encryption or fake decryption are defined so as to be identical to the real input data input in the single real encryption or real decryption.

10. The method according to any one of claims 6 to 8, wherein the first data input in each fake encryption or fake decryption are defined randomly.

11. The method according to claim 10, wherein the first data are defined randomly prior to the execution of said series so as to be identical for each fake encryption or fake decryption of said series.

12. The method according to claim 10, wherein the first data are defined randomly and independently for each fake encryption or fake decryption of said series.

13. The method according to any one of claims 1 to 5, wherein said series comprises a plurality of successive encryptions of triple DES type or of successive decryptions of triple inverse DES type, the method comprising:
- obtaining of real input data (IN3) to be encrypted or decrypted; wherein during said series:
- at least one fake encryption (3DES1, 3DES2, 3DS4) or fake decryption each inputting random fake data is carried out by randomly applying the first or second mode (MD1, MD2); and
- a single real encryption or real decryption (3DES3) inputting the real input data (IN3) is carried out by randomly applying the first or the second mode (MD1, MD2) to encrypt or decrypt the real input data.

14. A computer program (PG1) comprising instructions for executing steps of a method according to any one of claims 1 to 13 when said program is executed by a computer.

15. An encryption or decryption device configured to execute a series of at least one encryption (3DES1-3DES 4) of triple DES type or of at least one decryption (3DES1a,3DES 2a) of triple inverse DES type, each encryption or decryption inputting input data (IN) and comprising a first, second and third inverse operation (OP1, OP2, OP3) of DES type or DES which are carried out successively by using respectively a first, second and third key (K1, K2, K3),
wherein the first and third operations are encryption or decryption operations of identical type, whereas the second operation is an operation of type inverse to the first and third operations,
said device comprising:
- an execution module for executing each encryption or decryption of said series, either according to a first mode (MD1) wherein the second and third keys (K2, K3) are identical keys (KR1), different to the first key (K1), such that the second and third operations (OP2, OP3) cancel each other out, or according to a second mode (MD2) wherein the first and second keys (K1, K2) are identical keys (KR2, KR2), different to the third key (K3), such that the first and second operations (OP1, OP2) cancel each other out; and
- a selection module for randomly selecting one of the first mode (MD1) and the second mode (MD2) to be applied for each encryption or decryption of said series.
